Europäisches Patentamt

(19) European Patent Office

Office européen des brevets

(11) Veröffentlichungsnummer : **0 094 549**
**B1**

(12) # EUROPÄISCHE PATENTSCHRIFT

(45) Veröffentlichungstag der Patentschrift :
25.03.87

(51) Int. Cl.⁴ : **F 16 L 43/00**

(21) Anmeldenummer : 83104332.8

(22) Anmeldetag : 03.05.83

(54) Rohrfitting.

(30) Priorität : 13.05.82 DE 3218061
03.11.82 DE 3240582

(43) Veröffentlichungstag der Anmeldung :
23.11.83 Patentblatt 83/47

(45) Bekanntmachung des Hinweises auf die Patenterteilung : 25.03.87 Patentblatt 87/13

(84) Benannte Vertragsstaaten :
AT BE CH FR GB IT LI NL SE

(56) Entgegenhaltungen :
CH-A-    293 222
CH-A-    293 521
DE-A- 2 536 852
DE-C-    499 090
DE-C-    883 825
DE-U- 7 418 902
US-A- 1 966 038
US-A- 2 789 844
US-A- 3 168 104
US-A- 3 416 571

(73) Patentinhaber : **Kessel, Bernhard**
**Bahnhofstrasse 31**
**D-8071 Lenting (DE)**

(72) Erfinder : **Kessel, Bernhard**
**Bahnhofstrasse 31**
**D-8071 Lenting (DE)**

(74) Vertreter : **Sasse, Volker, Dipl.-Ing.**
**Parreutstrasse 27**
**D-8070 Ingolstadt (DE)**

## Beschreibung

Die Erfindung bezieht sich auf einen Rohrfitting mit Flanschanschluß zum Verbinden von mindestens zwei im Winkel zueinander angeordneten Rohrenden, wobei am Rohrfitting an mindestens einem Ende ein ringförmiger und über die Fittingoberfläche überstehender Randflansch angeformt ist, über den zum Festlegen mit einem weiteren Randflansch eine Klemmschelle greift.

Zum Verbinden von Rohren kennt man sogenannte Muffenverbindungen, bei denen jeweils ein Teil als glattes Ende und ein anderes Teil als übergreifende Muffe mit eingelegtem Dichtungsring ausgebildet ist und ineinander geschoben werden. Für diese Steckverbindung benötigt man verhältnismäßig lange, geradlinige Rohrenden. Ferner ist bekannt, zwei miteinander zu verbindende Rohre mit je einem Flansch zu versehen und die Rohre mittels dieser Flansche durch Verschrauben miteinander zu verbinden. Diese Art der Verbindung ist jedoch verhältnismäßig aufwendig, und durch das Gewinde läßt sich ein angesetzter Rohrkrümmer nicht in beliebiger Richtung festlegen. Für den Gewindebereich benötigt man am Rohr ein gerades Ende von ausreichender Länge, mit dem an einem Bogenteil die Krümmung aufgehoben wird. Infolgedessen entstehen beim Verlegen der Rohre nach vorgegebenen Wegen mit engen Krümmungen erhebliche Schwierigkeiten. In der Praxis werden die Rohrleitungen meistens längs des Mauerwerks verlegt und falls Mauervorsprünge, andere Widerstände oder Ecken auftreten, sollen die Rohrleitungen möglichst platzsparend und enganliegend herumgeführt werden, was mit den bisher bekannten Fittings nicht im gewünschten Maß erreichbar ist.

Aus der CH-A-293 521 ist bereits eine Flanschverbindung an Rohrfittings bekannt, die stirnseitig aneinandergefügt und dann mit einem übergreifenden Spannring zusammengehalten werden. Die Flansche zeigen konische Außenflächen, über die der Spannring greift und beim Festziehen somit die Stirnflächen der Rohrenden aufeinander drückt. Sie lassen sich unverspannt gegeneinander um 360° verdrehen. Die Fittingstücke sind aber so lang und mit nur geringer Krümmung gewählt, daß ausreichender Platz zum Aufsetzen der Spannringe gegeben ist. Mit zwei Rohrfittings läßt sich kein von 90° bis 0° abgewandelter Rohrkrümmer bilden. Wenn die Krümmer etwas verspannt oder verkantet verlegt werden, entstehen an den steif ausgebildeten Flanschen undichte Stellen, die bei dieser Ausbildung nicht zu beheben sind.

In gleicher Weise ist eine Flanschverbindung in der CH-A-293 222 beschrieben. Diese Rohrenden zeigen flachere, dafür längere konisch ansteigende Enden, über die ein zusammenschraubbarer Spannring greift und die Rohrenden somit stirnseitig aufeinander drückt. Auch mit diesen breit ausgelegten Wulstenden lassen sich keine 90°-Bögen von zwei kurzen Fittingstücken erstellen. Undichte Stellen bei verkantetem Zusammenziehen der Stirnflächen müssen bei dieser Ausführung hingenommen werden.

Der Erfindung liegt die Aufgabe zugrunde, einen Rohrfitting zu schaffen, mit dem Rohrnetzteile oder Rohrnetze mit einfachen und komplizierten flächigen und räumlichen Rohrführungen auf engstem Raum erstellbar sind und die außerdem eine dichte Verbindung bieten, selbst wenn Verkantungen oder Verspannungen an den Rohrenden auftreten sollten.

Die gestellte Aufgabe wird erfindungsgemäß durch die im kennzeichnenden Teil von Anspruch 1 angegebenen Merkmale gelöst. Der Fitting bietet durch die kurze Innenkrümmung, die einen Winkel von mindestens 45° aufweist und die so knapp gehalten ist, daß gerade über jeden Flansch eine halbe Klemmschelle greift, den kürzesten erstellbaren Bogen, bei dem der kreisförmige Durchmesser über die gesamte Länge gleich bleibt. Bereits zwei aneinandergesetzte Fittings lassen sich gegeneinander um 360° verdrehen und bilden dabei ein variables Rohrstück, das von der gestreckten Länge bis auf 90° stufenlos abgebogen werden kann. Mehrere aneinandergereihte Fittings ermöglichen eine stark verwundene Rohrführung. Durch die schmale Flanschausbildung, die bevorzugt eine Stirnfläche ohne Erhebungen hat, lassen sich die Fittings auf kürzeste Länge miteinander verbinden. Der Flansch wirkt sich nicht nachteilig auf die Krümmung aus. Der über der Fittingoberfläche nur knapp überstehende Randflansch bietet für die aufgesetzte Klemmschelle genügend Angriffsfläche, um die Fittings mit ihren Stirnflächen aneinander zu pressen und eine dichte Verbindung zu schaffen. Die dichte Verbindung wird einerseits durch das in die Nut eingelegte Dichtmittel erreicht, andererseits trägt die durch die umlaufende Aussparung erzeugte Elastizität im Flansch dazu bei. Der Flansch erhält in seinem außerhalb des Rohres liegenden Erstreckungsbereich durch die Aussparung die gewünschte Elastizität, mit der er sich unter Ausgleich von Fertigungstoleranzen oder Fluchtfehlern relativ zum Rohrkörper verformen läßt. Es hat sich überraschend gezeigt, daß infolge dieser Sollbiegestelle bereits bei geringen Anpreßkräften seitens der Befestigungsmittel eine saubere und gleichmäßige Belastung des Dichtmittels und damit eine einwandfreie Abdichtung erreicht wird. Die Aussparung bildet nicht nur diese Sollbiegestelle, sondern reduziert auch die Anlagefläche zwischen den Stirnseiten zweier solcher Flansche in einer Flanschverbindung, woraus eine erhöhte spezifische Flächenpressung und erhöhte Dichtwirkung resultiert. Obwohl die Flanschverbindung einwandfrei abdichtet und im äußeren Flanschbereich festliegt, ist eine gewisse Eigenbewegung am Flanschfuß möglich, die sehr positiv, z. B. bei thermisch bedingten Relativbewegungen, bei Vibrationen aufgrund einer Strömung oder bei durch Drucksteigerungen bedingten Bewegungen oder allgemeinen inneren Spannungen sich bemerkbar macht.

Eine Weiterbildung des Gegenstandes wird mit den Merkmalen des Anspruchs 2 erreicht. Dieser bevorzugte Dreieranschluß gestattet die Zusammenführung von drei Rohrzweigen auf engstem Raum. Die Anschlußenden sind dabei so nahe zueinander gesetzt, daß der gewährleistete uneingeschränkte Durchmesser in jeder Strömungsrichtung und bei jedem Strömungsverlauf gerade noch erhalten bleibt. Dieses enge Zusammenfassen ist schließlich auch durch die günstige Flanschverbindung mit der winkeligen Abzweiglage gegeben, wobei zwei Anschlüsse in annähernd 90° zueinander stehen und der dritte Abzweiger entgegengesetzt gerichtet ist. Der Schutzumfang soll hierbei auch noch einen Fitting erfassen, der mit mehr als zwei Zuläufen und einem Ablauf ausgestattet ist. Es ist denkbar, drei oder vier Zuläufe sternenförmig vorzusehen, wobei die Zuläufe untereinander auch verschieden großen Durchmesser haben könnten. Die Kombination eines Fittings mit 45° zueinander geneigte Anschlußöffnungen mit einem Rohrfitting mit drei Anschlußöffnungen läßt sich sehr einfach zu einem Siphon ausbilden, wobei die dritte Öffnung mit einem Deckel verschlossen wird und als Reinigungsöffnung zu nutzen ist.

Ein weiterer, wichtiger Gedanke wird mit Anspruch 3 angegeben. An sich kann mit dem Fitting jedes beliebige Rohrnetz geschaffen werden unter der Voraussetzung, daß die weiterführenden Rohre an den Enden ebenfalls mit den passenden Endflanschen versehen sind. Da diese Voraussetzung zunächst nicht immer gegeben sein wird, weil auch noch herkömmliche Rohre mit Spitz- oder Muffenenden gebräuchlich sind, so ist es zweckmäßig, die Kombination gemäß Anspruch 3 zu wählen, damit das Zusammenschließen der Rohrfittings mit den geraden Rohren kein Problem ergibt.

Weiterhin ist es zweckmäßig, wenn eine Ausbildung vorliegt, wie sie aus Anspruch 4 hervorgeht. Diese Ausbildung der Endflansche hat den Vorteil, daß mit Spannschellen jeweils zwei Endflansche sehr fest und damit gut dichtend gegeneinander gezogen werden können. Durch den vorgegebenen Verlauf der Abschrägung am Flanschrand verliert der Rohrfitting nicht seine Krümmung und die Angriffsfläche für die Spannschelle ist trotz geringer Höhe ausreichend groß. Im gelösten Zustand der Klemmschelle haben die Flanschflächen gegeneinander genügend Spiel, so daß die Fittings sich gut gegeneinander um 360° drehen lassen.

Ein weiterer, wichtiger Gedanke zur Weiterbildung des Gegenstandes geht aus Anspruch 5 hervor. Der Verschlußdeckel wird jeweils dort eingesetzt, wo ein Anschlußende unnötig ist und deshalb verschlossen werden muß. Der Verschlußdeckel paßt auf jeden Endflansch und läßt sich mit der gleichen Klemmschelle festlegen, die auch für die Verbindung der einzelnen Fittings eingesetzt wird. Der Deckelrand ist entsprechend dem Flansch ausgebildet. Der Deckel verschließt an dem Fitting die Öffnung so knapp, daß keine unnötigen Überstände beim Rohr verbleiben. Die derart verschlossene Öffnung kann günstig als Reinigungsöffnung benutzt werden und außerdem läßt sich auch das Rohrsystem an dieser Stelle ohne Aufwand erweitern.

Ein weiterer, wichtiger Gedanke geht aus Anspruch 6 hervor. Das Dichtelement zwischen jeweils zwei Oberflächen zweier aneinander gesetzter Endflansche, die selbst keine Erhebungen tragen, mit denen sie in Ausnehmungen eingreifen, hat nicht nur die Aufgabe, nach dem Schließen der Klemmschelle die Verbindungsstelle nach außen hin abzudichten, sondern gleichzeitig eine zentrierende und drehsichernde Funktion bei der Montage der miteinander zu verbindenden Fittings zu bieten. Dabei hat es sich in der Praxis als zweckmäßig erwiesen, die Nuten und den Querschnitt des Dichtelementes so auszugestalten, daß durch den Formschluß zwischen diesen die Verdrehung solange noch gut möglich ist, solange die Klemmschelle nicht geschlossen ist. Wenn aus mehreren Rohrfittings eine komplizierte Rohrführung auf engstem Platz geschaffen werden muß, so werden die einzelnen Fittings zunächst nur zusammengefügt und die Klemmschellen locker herumgelegt und die Fittings solange verdreht, bis die gewünschte Rohrführung auf engstem Raum erreicht ist. Dann werden die Klemmschellen festgezogen und dabei erfolgt gleichzeitig die Abdichtung der Verbindungsstellen.

Eine zweckmäßige Weiterbildung des Gegenstandes geht aus Anspruch 7 hervor. Diese Form der Aussparung ist herstellungstechnisch einfach zu realisieren und führt zu einer Sollbiegestelle, in der keine lokalen Spannungsspitzen oder Überbeanspruchungen auftreten können.

Ein weiterer, wichtiger Gedanke der Erfindung geht aus Anspruch 8 hervor. Bei dieser Ausbildung bilden die beiden Aussparungen bei einer Flanschverbindung aus zwei identischen Flanschen einen umlaufenden Ringraum, der gegenüber dem Rohrinneren nur über einen engen Spalt zugänglich ist. In der Abwassertechnik hat dieser enge Spalt den Vorteil, daß er einerseits kein merkbares Strömungshindernis bildet und daß andererseits keine Ablagerungen entstehen, die zu einem allmählichen Zuwachsen des nutzbaren Rohrquerschnittes führen können. Eine unmittelbare Anlage des Stirnflächenbereichs am Flanschfuß in einer solchen Flanschverbindung wäre nachteilig, weil diese Anlage dann die Wirkung der Sollbiegestellen wieder beeinträchtigen könnte. Die Gleichheit der Flanschausbildung ohne Erhöhungen und nur mit Aussparungen bietet den Vorteil der geringen Lagerhaltung, denn jedes Flanschende paßt aufeinander und benötigt kein negatives Gegenstück.

Alternativ dazu ist auch eine Ausführungsform denkbar, wie sie Anspruch 9 erläutert. Diese Ausbildung ist formtechnisch besonders einfach. Die Aussparungen beider Flansche einer Flanschverbindung bilden jedoch dann eine umlaufende und zum Rohrinneren hin offene Ringnut im Bereich der Flanschverbindung. Diese Ausführungsform hat den Vorteil, daß die Sollbiegestelle sich über einen optimal großen, radialen Bereich erstreckt.

Weiterhin ist es zweckmäßig, die Merkmale von Anspruch 10 vorzusehen. Es wird auf diese Weise die eingangs erläuterte Flächenpressung in den unmittelbar aufeinandertreffenden Bereichen der Stirnseiten zweier Flansche einer Flanschverbindung optimiert, was der Abdichtwirkung zugute kommt. Herstellungstechnisch ist dieser Gesichtspunkt ebenfalls wichtig, weil nur verhältnismäßig kleine Flächenbereiche sauber und präzise bearbeitet sein müssen.

Ein weiterer, wichtiger Gedanke der Erfindung geht aus Anspruch 11 hervor. Bei dieser Ausbildung wird gewährleistet, daß beim Herstellen der Flanschverbindung das Dichtmittel in Verbindungsrichtung zusammengedrückt und in radialer Richtung verformt wird, bis es die Aufnahmen beider Flansche gut ausfüllt und damit zu der gewünschten Abdichtung führt. Die Expansion des Dichtmittels erfolgt infolge dieser Ausbildung exakt entgegengesetzt zu der Richtung des später wirkenden Innendrucks aus den verbundenen Rohren. Ein weiterer Vorteil dieses Gestaltungsmerkmals besteht darin, daß bei gelockerten Befestigungsmitteln und bei relativem Verdrehen der Flansche die Gefahr nicht besteht, daß die Innen- bzw. Außenränder der beiden Aufnahmen das Dichtmittel beschädigen, weil sich dieses in unverformtem oder noch wenig verformtem Zustand noch nicht in diese Bereiche hineinerstreckt. Es besteht somit auch nicht die Gefahr, daß es zwischen den Flanschen außerhalb der Aussparung eingeklemmt wird. Das Dichtmittel ist für die gelockerten Flansche eine gute Führung und bietet auch gute Gleiteigenschaften.

Eine besonders gute Abdichtwirkung wird bei einer Ausführungsform erreicht, die aus Anspruch 12 entnehmbar ist. Diese Gestalt der Aufnahme ist zudem herstellungstechnisch besonders gut zu verwirklichen.

Alternativ dazu ist auch eine Form einer Aufnahme gemäß Anspruch 13 vorteilhaft. Bei dieser Querschnittsgestalt wird eine besonders gleichmäßige Verformung des Dichtmittels beim Zusammenspannen der Flansche erreicht.

Bei einer weiteren aus Anspruch 14 entnehmbaren Ausführungsform ist der Querschnitt der Aufnahme so gewählt, daß beim Zusammenpressen der Flansche das Dichtmittel deformiert wird und in Richtung entgegen dem späteren Innendruck aus den miteinander verbundenen Rohren sich verlagert.

Eine vorteilhafte Weiterbildung des Anmeldungsgegenstandes ist aus Anspruch 15 zu entnehmen. Die Ausbildung sorgt dafür, daß die Befestigungskräfte der Befestigungsmittel tatsächlich nur dort zur Wirkung kommen, wo sie für die Abdichtung gebraucht werden. In dem Bereich radial außerhalb des Dichtmittels könnten aufeinanderliegende Flächenbereiche in den Stirnseiten der Flansche zu keinem nutzbaren Dichteffekt mehr genutzt werden. Gleichzeitig verringert diese Maßnahme wiederum die Größe der Flächenbereiche, in denen die gegeneinander gespannten Flansche tatsächlich mit ihren Stirnseiten aneinander zu liegen kommen.

Schließlich zeigt sich besonders vorteilhaft eine Ausführungsform der Erfindung, wie sie aus Anspruch 16 hervorgeht. Diese ringförmige Rippe könnte auch aus kleinen erhabenen Kegelspitzen bestehen, die sich in das Dichtmittel eindrücken und auf diese Weise einen zusätzlichen Zentriereffekt hervorrufen. Die ringförmige, umlaufende Spitzrippe hat zusätzlich den Vorteil, zur erhöhten Dichtung beizutragen.

Nachstehend werden anhand der Zeichnung Ausführungsformen der Erfindung erläutert.

Es zeigen :

Figuren 1a, 1b, 1c drei verschiedene Fittings, jeweils in Seitenansicht ;

Figuren 2 und 3 Adapterteile, jeweils in einer Seitenansicht ;

Figur 4 einen Schnitt durch einen Verschlußdeckel für eine mit einem Flansch ausgebildeten Anschlußöffnung ;

Figur 5 eine abgewandelte Ausführungsform des Fittings von Fig. 1b ;

Figur 6 einen Querschnitt durch eine Klemmschelle ;

Figur 7 eine Seitenansicht eines Etagenbogens, der aus zwei Fittings gemäß Fig. 1a und einer Klemmschelle gemäß Fig. 6 zusammengesetzt ist ;

Figur 8 eine gewinkelte Rohrabzweigung ;

Figur 9 einen Fitting gemäß Fig. 1b mit verschlossener Reinigungsöffnung ;

Figur 10 einen Siphon aus mehreren Fittings ;

Figur 11 ein Fitting mit zwei verschiedenen Verbindungsenden ;

Figur 12 eine Rohr-Flanschverbindung ;

Figur 13 eine vergrößerte Darstellung von Flanschen und ihre Verbindung ;

Figuren 14, 15, 16 jeweils ein Detail einer weiteren Ausführungsform eines Flansches im Schnitt ;

In Fig. 1a ist ein Rohrfitting A gezeigt, der zwei unter einem Winkel von 45° zueinander ausgerichtete Anschlußenden 1, 2 besitzt, die von Endflanschen 3, 4 umgeben werden. Die Anschlußenden 1, 2 bzw. die Endflansche 3, 4 sind auf der einen Rohrwandungsseite, und zwar in der Beuge, einander in einem geringen Abstand $S_a$ unmittelbar benachbart, der nur wenige Millimeter zu betragen braucht, um ein Halteelement eingreifen zu lassen. Die Dicke f der Endflansche 3, 4 ist nur geringfügig größer als die Wandstärke w und der Außendurchmesser der Endflansche 3, 4 erhebt sich nur geringfügig über den Außenrohrdurchmesser. Der Innendurchmesser d des Fittings A bleibt sowohl über die gesamte Bodenlänge als auch in den Anschlußöffnungen 1, 2 unverändert, so daß keine Einschnürungen oder Hinterschneidungen sich im Strömungsverlauf ergeben.

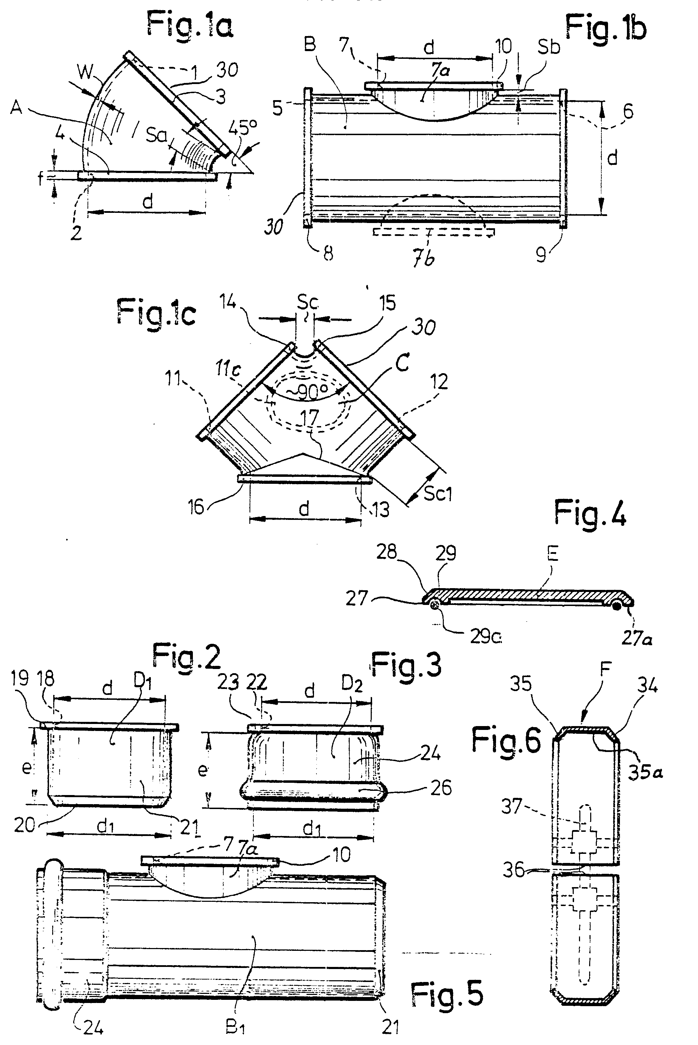

In Fig. 1b ist ein anderer Rohrfitting B gezeigt, der aus einem geraden Rohrstück besteht, das an seinen beiden Enden Anschlußöffnungen 5, 6 und diese umgebende Randflansche 8, 9 aufweist. Seitlich ist ein Abzweiganschluß 7a mit Anschlußöffnung 7 und umgebenden Randflansch 10 vorgesehen, wobei die Anschlußöffnung 7 und der Randflansch 10 unmittelbar benachbart zum Außenumfang des Rohrstückes liegen. Es könnten zusätzlich noch ein oder mehrere Anschlüsse vorhanden sein, wie es strichliert mit 7b in Fig. 1b dargestellt ist. Der Abstand $S_b$ zwischen dem Randflansch 10 und dem Umfang des Rohrstückes ist annähernd gleich wie der Abstand $S_a$ in Fig. 1a. Die Randflansche 8, 9 könnten dabei ebenso dicht an den Randflansch 10 gesetzt sein, womit ein Fitting als Dreieranschluß gegeben wäre, der zweimal 90° zueinander geneigte Anschlußöffnungen 5, 7 bzw. 6, 7 aufweist. Auch bei diesem Fitting B ist wiederum der konstante Durchmesser d über den gesamten Strömungsbereich gewährleistet.

In Fig. 1c ist ein weiterer Rohrfitting C als Dreieranschluß mit zwei jeweils um annähernd 90° zueinander versetzten Anschlußöffnungen 11, 12 gezeigt, die mit Randflanschen 14, 15 umgeben sind. Die dritte Anschlußöffnung 13 liegt den beiden Anschlußöffnungen 11, 12 gegenüber und wird von einem Randflansch 16 umgeben. Die beiden Randflansche 14, 15 liegen in der inneren Beuge mit einem sehr kurzen Abstand $S_c$ außerordentlich nahe beieinander, so daß über jeden Randflansch gerade nur der Befestigungsring übergreifen kann, ohne den anderen zu behindern. Zwischen diesen Randflanschen 14, 15 und dem Randflansch 16 liegt ebenfalls nur ein geringer Abstand $S_{c1}$, der nur so weit gefaßt ist, daß der Durchmesser d auch in der Anschlußöffnung 13 ohne Einengung vorliegt. Wie strichliert mit 11c angedeutet, wären auch noch weitere Anschlüsse möglich, die auch unterschiedlich große Durchmesser haben könnten.

Die Randflansche 3, 4, 8, 9, 10, 14, 15, 16 der drei beschriebenen Rohrfittings A, B, C sind vollkommen gleich ausgebildet und passen mit ihren Stirnflächen 30 aufeinander. Die Rohrfittings A, B, C lassen sich wahlweise durch Aufeinanderlegen der Randflansche 3, 4, 8, 9, 10, 14, 15, 16 und durch eine übergreifende Klemmschelle F miteinander verbinden, die im Detail in Fig. 6 dargestellt ist. Die Klemmschelle F kann so weit mit ihren Enden 36 geöffnet werden, daß sie über die aufeinandergelegten Randflansche 3, 4, 8, 9, 10, 14, 15, 16 geschoben werden kann. Mit ihrem Querschnitt 35a, der dachförmig und mit Abschrägungen 34, 35 ausgestattet ist, stützt sie sich and den Rändern 32 der Randflansche 3, 4, 8, 9, 10, 14, 15, 16 ab und preßt diese stirnseitig aufeinander. Ein Spannverschluß 37, der nur andeutungsweise gezeigt ist, sorgt beim Schließen der Klemmschelle F für ausreichend große Verbindungskräfte.

Mit den Fittings A, B, C gemäß den Fig. 1a bis 1c und der Klemmschelle F gemäß Fig. 6 lassen sich alle in der Praxis benötigten Rohrnetze oder Rohrnetzteile schaffen, unabhängig davon, ob sie eine flächige oder eine räumlich verwundene Rohrführung haben müssen. Damit diese Rohrfittings A, B, C auch an weiterführende, herkömmliche Rohrleitungen angeschlossen werden können, deren Anschlußenden mit Steck- oder Muffenanschluß ausgebildet sind, sind Adapterteile $D_1$, $D_2$ gemäß den Figuren 2 und 3 vorgesehen. Der Adapterteil $D_1$ besitzt auf der einen Seite ein glattes Spitzende 21 mit vorderer abgeschrägter Einsteckkante 20 und hat die übliche Einstecklänge e, die für die geforderte Dichtigkeit und Führung erforderlich ist. Der Einsteckkante 20 entgegengesetzt weist das Adapterteil $D_1$ einen Randflansch 19 entsprechend der Randflansche 3, 4, 8, 9, 10, 14, 15, 16 auf, der als Kupplungselement auf die übrigen Randflansche paßt.

Der Adapterteil $D_2$ weist hingegen ein bekanntes Muffenende 24 mit einer innenliegenden ringförmig umlaufenden, nach außen vorstehenden Sicke 26 auf und trägt auf der entgegengesetzten Anschlußöffnung 22 einen Randflansch 23 mit dem Innendurchmesser d, der sich ebenfalls mit allen übrigen Randflanschen kuppeln läßt. Die Einstecktiefe e hat die gleiche Länge wie beim Spitzende 21. In die Sicke 26 läßt sich ein üblicher Rollring als Dichtungsteil einlegen. Dieses Muffenende 24 oder das Spitzende 21 kann auch direkt auf einer Seite eines Rohrfittings A, B, C angeformt sein. Allerdings muß dadurch eine größere und vielseitigere Lagerhaltung von Fittings in Kauf genommen werden.

Fig. 5 zeigt eine abgewandelte Ausführungsform des Fittings von Fig. 1b, wobei das Rohrstück $D_1$ an einem Ende mit einem Spitzende 21 und am entgegengesetzten Ende mit einem Muffenende 24 versehen ist. Der Abzweiganschluß 7a mit Anschlußöffnung 7 und umgebenden Randflansch 10 sind extrem nahe an die Fittingoberfläche herangesetzt, daß gerade noch die halbe Klemmschelle F über den Randflansch 10 greifen kann.

Die Abstände $S_a$, $S_b$, $S_c$ (Fig. 1a, 1b, 1c) sind so kurz gewählt, daß die über die Randflansche 3, 4, 8, 9, 10, 14, 15, 16, 19, 23 gelegten Klemmschellen nicht miteinander kollidieren.

In Fig. 4 ist ein Verschlußdeckel E gezeigt, der auf jeden Randflansch 3, 4, 8, 9, 10, 14, 15, 16, 19, 23 der Rohrfittings paßt und die jeweils nicht benötigte Anschlußöffnung verschließen kann. Der Verschlußdeckel E läßt sich ebenfalls mit einer Klemmschelle F festlegen und weist zu diesem Zweck am Rand 27 eine außenseitige Abschrägung 28 und eine Stirnfläche 27a auf, in die eine umlaufende Nut 29 zum Einlegen eines Dichtrings 29a vorgesehen ist.

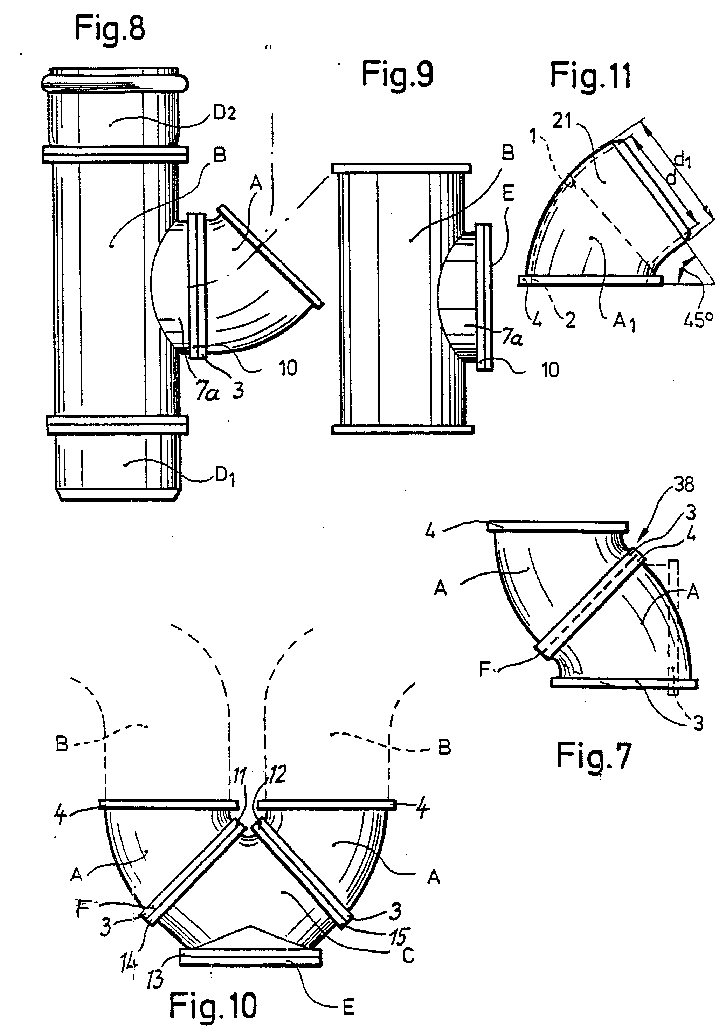

In Fig. 7 sind zwei Rohrfittings gemäß Fig. 1a zu einem sogenannten Etagenbogen zusammengesetzt. Dabei sind ihre Randflansche 3, 4 unter Zwischenlage eines nicht gezeigten Dichtungsrings aufeinandergesetzt und mit einer Klemmschelle F zusammengehalten. Der Etagenbogen 38 ist in der Lage, zueinander versetzt aber parallel stehende Zu- und Abläufe miteinander zu

verbinden. Durch eine relative stufenlose Verdrehung der beiden Rohrfittings A zueinander, wie es nach Öffnen der Spannschelle F möglich ist, läßt sich auch ein Winkelbogen bis zu 90° mit dem Zu- und Ablauf einstellen (in strichlierten Linien angedeutet).

Figur 8 zeigt eine weitere Kombination von Rohrfittings A und B mit zwei Adapterteilen D₁ und D₂. Mit diesen angesetzten Adapterteilen D₁, D₂, die auch direkt an den Fitting B angeformt sein können gemäß Fig. 1b, lassen sich .die gewöhnlichen Rohrleitungen verbinden, während an den Abzweiganschluß 7a der Fitting A angeschlossen ist. Unter Verwendung weiterer, nicht gezeigter Fittings können weitere Rohrwindungen gebildet werden. Ein parallel zum Fitting B verlaufender Rohrstrang kann sogar unmittelbar daneben laufen, weil die Fittings A eine sehr platzsparende Umlenkung ohne Querschnittsveränderung bieten. Darüber hinaus wäre es auch möglich, zwei Fittings B bei ihren Abzweiganschlüssen 7a an den Randflanschen 10 zu verbinden und so verbundene Zwillingsrohre zu bilden.

Figur 9 zeigt den Rohrfitting B, der am Abzweiganschluß 7a mit einem Verschlußdeckel E verschlossen ist. Nach Abnahme des Verschlußdeckels E besteht ungehinderter Zutritt in das Rohr und der Abzweiganschluß 7a dient somit als Reinigungsöffnung.

Figur 10 zeigt, wie unter Verwendung von mehreren Fittings ein Siphon geschaffen wird. Hierzu wird ein Fitting C gemäß Fig. 1c eingesetzt, dessen dritte Anschlußöffnung 13 durch einen Verschlußdeckel E verschlossen ist. An den beiden anderen Anschlußöffnungen 11, 12 ist jeweils ein Fitting A befestigt, an denen dann weitere Rohre oder Fittings angesetzt werden können.

Figur 11 zeigt eine weitere Ausbildung des Fittings A₁, bei dem die eine Anschlußöffnung 2 mit einem Randflansch 4 und die andere Anschlußöffnung 1 mit einem Spitzende 21 versehen ist. Anstelle des Spitzendes 21 könnte hier auch ein Muffenende 24 angesetzt sein. Der Innendurchmesser d ist für den Fitting A₁ über die gesamte Länge konstant. Dieser Fitting A₁ ist als Kombinationsstück zwischen den Rohren mit herkömmlichem Verbindungsteil und dem neuartigen Randflansch 3, 4 zu verstehen.

Die dargestellten Kombinationsmöglichkeiten mit den Rohrfittings stellen nur eine ausgewählte Anzahl von Möglichkeiten dar, mit denen die universelle Verwendbarkeit der erfindungsgemäßen Fittings dokumentiert werden soll. Es ist ohne weiteres auch möglich, mit den Fittings Geruchverschlüsse, Prallrohre, Sammelrohre und dergleichen zu schaffen, die in üblichen Kanalisationssystemen Verwendung finden können.

Der Fachmann ist mit diesen Fittings A, B, C, dem Verschlußdeckel E und der Klemmschelle F sowie dem Dichtring 29a in der Lage, alle praktisch erforderlichen Rohrnetze mit beliebiger flächiger oder räumlicher Wegführung zu schaffen und zwar auf engstem Raum.

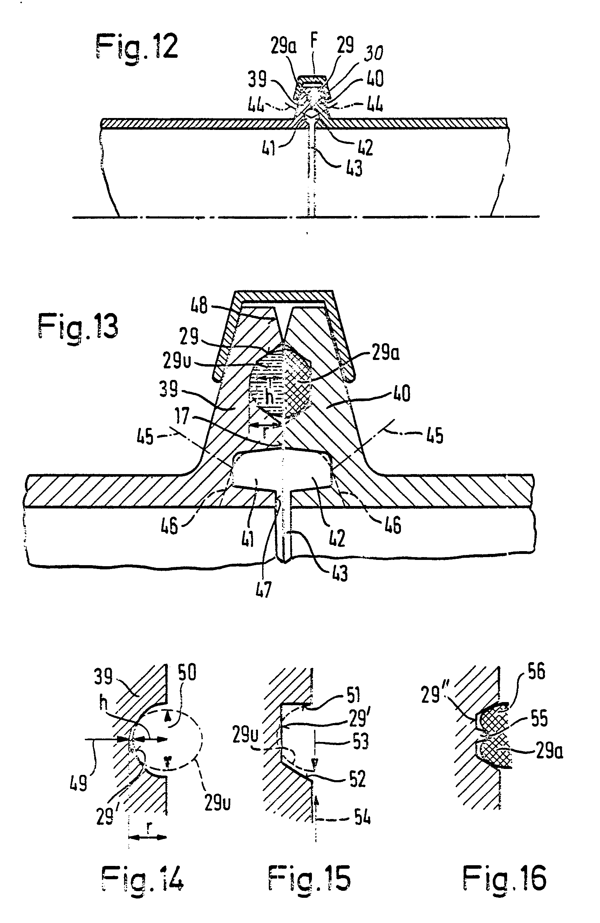

In Fig. 12 ist die Randflanschausbildung und die Zusammenfügung der Randflansche im Schnitt genauer gezeigt. Die angeformten Randflansche 39, 40 werden durch eine Klemmschelle F mit V-förmigem Innenquerschnitt gegeneinander gepreßt. Zwischen den Stirnflächen 30 der Randflansche 39, 40 ist ein elastomerer Dichtring 29a eingefügt, der in einer Nut 29 untergebracht ist. In einem Abstand zur Nut 29 ist radial nach Innen in der Stirnfläche 30 eines jeden Randflansches 39, 40 eine umlaufende Aussparung 41, 42 vorgesehen, wobei die beiden Aussparungen 41, 42 über einen schmalen Spalt 43 zum Rohrinneren führen. Die Aussparungen 41, 42 bilden Sollbiegestellen mit verringerter Wandstärke am Randflanschfuß in etwa im Bereich 44 der Randflansche 39, 40. Die Außenseiten der Randflansche 39, 40 sind in etwa mit der gleichen Schräge geformt wie die Innenschrägen der Klemmschelle F.

Eine weitere Ausführungsform der Randflansche 39, 40 ist in der Fig. 13 erkennbar. Die Aussparungen 41, 42 sind im Querschnitt trogförmig ausgebildet. Es ist hierbei gut erkennbar, wie die Aussparung 41 zwischen dem Übergangsbereich vom Rohrende zum Randflansch 39 und der weiterführenden Außenseite des Randflansches 39 die Sollbiegestelle 45 mit reduzierter Wandstärke bildet. Mit strichlierten Linien 46 ist eine weitere Querschnittsform der Aussparungen 41, 42 angedeutet, mit der eine offene Rinne bei der Rohrwandführung verbleibt.

Die beiden Randflansche 39, 40 liegen praktisch nur im Bereich 17 mit ihren Stirnflächen aneinander, wobei dieser Bereich eine geringere radiale Erstreckung hat, als die mit 29 bezeichnete Nut für das Dichtmittel 29a. Jede Nut 29 hat eine im Querschnitt trapezförmige Gestalt, wobei die in Richtung der Rohrlängsachse gesehene Tiefe h der Nut 29 kleiner ist als die Hälfte r der in dieser Richtung gemessenen Gesamtstärke des Dichtmittels 29a in unverformtem Zustand (29u). Es ist die radiale Erstreckung der Nut 29 größer, als die in dieser Richtung gemessene Gesamtstärke des Dichtmittels 29a in unverformtem Zustand (29u). Gegenüber der Stirnfläche des Randflansches 39 ist das eigentliche Stirnende 47 des Rohres geringfügig zurückgesetzt, so daß der bereits erwähnte Spalt 43 entsteht. Von der Nut 29 bis zum Außenrand des Randflansches 39 führt eine schräge zurücklaufende Fläche 48.

In der rechten Hälfte von Fig. 13 ist das Dichtmittel 29a so gezeigt, wie es unter der Wirkung der Kraft der Klemmschelle 11 verformt ist. Es ist erkennbar, daß durch die Differenz zwischen h und r das Dichtmittel 29a in Richtung der Rohrlängsachsen zusammengedrückt wurde und in radialer Richtung expandierte. Damit wird eine besonders gute Abdichtung erzielt und außerdem wird vermieden, daß bei gelockerter Klemmschelle F und relativer Verdrehung der beiden Randflansche 39, 40 zueinander das Dichtmittel 29a von den Rändern der beiden Nuten 29 beschädigt oder eingeklemmt wird.

Bei der in Fig. 14 dargestellten Ausführungsform ist die Nut 29′ im Querschnitt bogenförmig gekrümmt, wobei wiederum die Tiefe h der Nut 29' kleiner ist als die Hälfte r der Gesamtabmessung des Dichtmittels in unverformtem Zustand (29u). Wenn zwei solche Randflansche 39, 40 mit ihren Stirnflächen gegeneinander gepreßt werden, wird das Dichtmittel 29a in Richtung eines Pfeiles 49 zusammengedrückt und dabei in radialer Richtung (Doppelpfeil 50) auseinandergedrückt, so daß die Nut 29' beider Randflansche 39, 40 vollständig ausgefüllt sind. Beim Lockern der Klemmschelle entfernt sich das Dichtmittel 29a wieder von den scharfen Kanten der Nut 29', so daß beim relativen Verdrehen dieser beiden Randflansche 39, 40 das Dichtmittel 29a nicht mehr von den scharfen Rändern verletzt werden kann.

In den Fig. 15 und 16 sind weitere Ausgestaltungen der Nuten 29 zur Aufnahme von Dichtmitteln gezeigt. Die Ausführung in Fig. 15 zeigt eine Ringnut 29' mit einer umfangsparallelen Außenwand 51 und eine schräg nach innen geneigte Innenwand 52. Die Tiefe der Ringnut 29' ist wieder geringer als die Hälfte der Gesamterstreckung des Dichtmittels 29a in unverformtem Zustand (29u). Das Dichtmittel 29a wird in Richtung eines Pfeils 53 radial nach innen verformt und füllt dabei die Ringnut 29' aus. Mit dem strichlierten Pfeil 54 wird die Wirkung des Druckes entgegen dem Dichtmittel 29a angedeutet.

Bei der Ausführungsform gemäß Fig. 16 ist auf dem Grund der Nut 29'' eine umlaufende, zugespitzte Erhebung oder Rippe 55 vorgesehen, die sich in das Dichtmittel 29a eindrückt und hilft, dieses zu arretieren. Diese Rippe 55 bringt zusätzlich einen erhöhten Dichteffekt. Anstelle nur einer Rippe könnten auch mehrere schmale gezackte Rippen nebeneinander am Grund der Nut hervorstehen. Denkbar ist auch, das Dichtmittel 29a von vornherein mit außen umlaufenden Nuten 56 auszustatten, die sich dann mit den Rippen 55 formschlüssig verzahnen und zu einer besonders guten Zentrierwirkung führen.

**Patentansprüche**

1. Rohrfitting (A, B, C) mit Flanschanschluß zum Verbinden von mindestens zwei im Winkel zueinander angeordneten Rohrenden, wobei am Rohrfitting (A, B, C) an mindestens einem Ende ein ringförmiger und über die Fittingoberfläche überstehender Randflansch (3, 4, 8, 9, 10, 14, 15, 16) angeformt ist, über den zum Festlegen mit einem weiteren Randflansch eine Klemmschelle (F) greift, dadurch gekennzeichnet, daß der Rohrfitting (A, B, C) mindestens zwei zueinander unter mindestens 45° geneigte Anschlußöffnungen (1, 2, 5, 6, 7, 11, 12, 13) aufweist, und daß die Stirnfläche (30) des Randflansches (3, 4, 8, 9, 10, 14, 15, 16) eine umlaufende Nut (29) zur Dichtmittelaufnahme und ferner zwischen der Nut (29) und dem Innendurchmesser (d) eine umlaufende Aussparung (41, 42) aufweist, die im Übergangsbereich von der Rohrwandung zum Flansch (39, 40) eine Sollbiegestelle mit reduzierter Wandstärke bildet.

2. Rohrfitting nach Anspruch 1, dadurch gekennzeichnet, daß in der Außenkrümmung des zwei unter 90° zueinander geneigte Anschlußöffnungen (11, 12) aufweisenden Fittings (C) mindestens eine weitere Anschlußöffnung (13) mit einem Randflansch (16) vorgesehen ist.

3. Rohrfitting nach Anspruch 1, dadurch gekennzeichnet, daß die zweite Anschlußöffnung (4, 9, 10, 15) als ein Spitz- (21) oder Muffenende (24) ausgebildet ist.

4. Rohrfitting nach den Ansprüchen 1 und 2, dadurch gekennzeichnet, daß der Rand (32) des Flansches (3, 4, 8, 9, 10, 14, 15, 16, 19, 23, 39, 40) zum Rohrmantel abgeschrägt verläuft und daß die Abschrägungen von zwei aufeinander liegenden Flanschen (3, 4, 8, 9, 10, 14, 15, 16, 19, 23, 39, 40) im Schnitt eine Dachform bilden, über die die Klemmschelle (F) mit ihrem dachförmigen Innenquerschnitt pressend faßt.

5. Rohrfitting nach einem der vorhergehenden Ansprüche, dadurch gekennzeichnet, daß der Anschlußöffnung (1, 2, 5, 6, 7, 11, 12, 13) ein Verschlußdeckel (E) mit abgeschrägtem Deckelrand (28) und einem Außendurchmesser entsprechend dem Flansch (3, 4, 8, 9, 10, 14, 15, 16, 19, 23, 39, 40) zugeordnet ist, der mit einer Klemmschelle auf jeden Flansch (3, 4, 8, 9, 10, 14, 15, 16, 19, 23, 39, 40) verschließend festlegbar ist.

6. Rohrfitting nach einem der vorhergehenden Ansprüche, dadurch gekennzeichnet, daß in der ohne Erhebungen ausgebildeten Stirnfläche (30) vorgesehenen umlaufenden Nut (29) ein bei der Montage als Zentrier- und Verdrehhilfe dienender und erst nach Schließen der Klemmschelle (F) abdichtender Dichtungsring (29a) vorgesehen ist.

7. Rohrfitting nach Anspruch 1, dadurch gekennzeichnet, daß die umlaufende Aussparung (41, 42) eine Ringnut mit vorzugsweise rundem oder trogförmigem Querschnitt ist.

8. Rohrfitting nach einem der Ansprüche 1 oder 7, dadurch gekennzeichnet, daß die innen durch den Rohrinnendurchmesser (d) und außen durch die Aussparung (41, 42) begrenzte Stirnfläche (47) gegenüber der übrigen Stirnfläche (30) des Flansches (39, 40) geringfügig zurückgesetzt ist.

9. Rohrfitting nach Anspruch 1, dadurch gekennzeichnet, daß die Aussparung (41, 42) mit annähernd gleichbleibender oder zunehmender Tiefe bis zum Rohrinnendurchmesser (d) geführt ist.

10. Rohrfitting nach wenigstens einem der Ansprüche 1 und 6 bis 9, dadurch gekennzeichnet, daß der radiale Abstand zwischen der umlaufenden Nut (29) für den Dichtungsring (29a) und der Aussparung (41, 42) kleiner ist als die radiale Erstreckung der umlaufenden Nut (29) in der Stirnseite (30) des Flansches (39, 40).

11. Rohrfitting nach einem der Ansprüche 1 und 6 bis 10, dadurch gekennzeichnet, daß die senkrecht zur Stirnseite (30) des Flansches (39, 40) gemessene Tiefe (h) der Dichtung (29a) aufnehmenden Nut (29) kleiner ist, als die Hälfte (r) der in der gleichen Richtung gemessenen Gesamtstärke des Dichtmittels (29u) in unbelastetem Zustand, während die radiale Erstreckung der Nut (29) in der Stirnseite (30) des Flansches (39, 40) größer ist, als die in radialer Richtung gemessene Gesamtstärke (2r) des Dichtmittels (29u) in unbelastetem Zustand.

12. Rohrfitting nach einem der Ansprüche 1 und 6 bis 11, dadurch gekennzeichnet, daß die die Dichtung (29a) aufnehmende Nut (29) eine im Querschnitt gleichschenkelige, trapezförmige Ringnut ist.

13. Rohrfitting nach einem der Ansprüche 1 und 6 bis 11, dadurch gekennzeichnet, daß die die Dichtung (29a) aufnehmende Nut (29') eine im Querschnitt bogenförmig gekrümmte Ringnut ist.

14. Rohrfitting nach einem der Ansprüche 1 und 6 bis 11, dadurch gekennzeichnet, daß die die Dichtung (29a) aufnehmende Nut (29') eine Ringnut mit einer zum Rohrinnendurchmesser (d) parallelen Außenwand (51), einer radial verlaufenden Bodenwand und einer schräg nach innen verlaufenden Innenwand (52) ist.

15. Rohrfitting nach wenigstens einem der Ansprüche 1 bis 14, dadurch gekennzeichnet, daß die Stirnfläche des Flansches von der eine Dichtung (29a) aufnehmenden Nut (31) bis zum Flanschaußenrand eine schräg zurücklaufende Phase (48) aufweist.

16. Rohrfitting nach wenigstens einem der Ansprüche 1 und 6 bis 15, dadurch gekennzeichnet, daß am Grund der die Dichtung (29a) aufnehmenden Nut (29'') wenigstens eine ringförmige, umlaufende erhabene Spitzrippe (55) angeformt ist.

### Claims

1. Pipe fitting (A, B, C) with a flange connection for connecting at least two pipe ends arranged at an angle to one another, with an annular edge flange (3, 4, 8, 9, 10, 14, 15, 16) which protrudes beyond the fitting surface being integrally formed on the pipe fitting (A, B, C) on at least one end, over which edge flange (3, 4, 8, 9, 10, 14, 15, 16) a clamping collar (F) grips for fastening to a further edge flange, characterized in that the pipe fitting (A, B, C) has at least two connecting openings (1, 2, 5, 6, 7, 11, 12, 13) inclined towards one another at least 45°, and that the end face (30) of the edge flange (3, 4, 8, 9, 10, 14, 15, 16) has an encircling groove (29) for accommodating a sealing means and, moreover, between the groove (29) and the inside diameter (d), an encircling recess (41, 42) which, in the transition area from the pipe wall to the flange (39, 40), has the predetermined bending location with a reduced wall thickness.

2. Pipe fitting according to Claim 1, characterized in that at least one further connecting opening (13) having an edge flange (16) is provided in the outer curve of the fitting (C) having two connecting openings (11, 12) inclined towards one another at 90 ºC.

3. Pipe fitting according to Claim 1, characterized in that the second connecting opening (4, 9, 10, 15) is made as a spigot end (21) or sleeve end (24).

4. Pipe fitting according to Claims 1 and 2, characterized in that the edge (32) of the flange (3, 4, 8, 9, 10, 14, 15, 16, 19, 23, 39, 40) runs in bevelled manner towards a pipe circumferential surface, and that the bevels of the two flanges (3, 4, 8, 9, 10, 14, 15, 16, 19, 23, 39, 40) resting one on top of the other form a roof shape in section, over which roof shape the clamping collar (F), with its roof-shaped inner cross-section, catches in pressing manner.

5. Pipe fitting according to one of the preceding claims, characterized in that a closure cover (E) having a bevelled cover edge (28) and an outside diameter corresponding to the flange (3, 4, 8, 9, 10, 14, 15, 16, 19, 23, 39, 40) is allocated to the connecting flange (1, 2, 5, 6, 7, 11, 12, 13), which closure cover (E) can be fastened in closing manner with a clamping collar onto each flange (3, 4, 8, 9, 10, 14, 15, 16, 19, 23, 39, 40).

6. Pipe fitting according to one of the preceding claims, characterized in that a sealing ring (29a) which acts as an aid to centering and turning during assembly and seals only after the clamping collar (F) is closed is provided in the encircling groove (29) provided in the end face (30) made without elevations.

7. Pipe fitting according to Claim 1, characterized in that the encircling recess (41, 42) is an annular groove with a preferably round or cross-shaped cross-section.

8. Pipe fitting according to one of Claims 1 or 7, characterized in that the end face (47) defined on the inside by the pipe inside diameter (d) and on the outside by the recess (41, 42) is set back slightly relative to the other end face (30) of the flange (39, 40).

9. Pipe fitting according to Claim 1, characterized in that the recess (41, 42) is guided with approximately uniform or increasing depth down to the pipe inside diameter (d).

10. Pipe fitting according to one or more of Claims 1 and 6 to 9, characterized in that the radial distance between the encircling groove (29) for the sealing ring (29a) and the recess (41, 42) is smaller than the radial extent of the encircling groove (29) in the end face (30) of the flange (39, 40).

11. Pipe fitting according to one of Claims 1 and 6 to 10, characterized in that the depth (h) of the groove (29) accommodating the seal (29a), which depth (h) is measured perpendicularly to the end face (30) of the flange (39, 40), is smaller than half (r) of the overall thickness, measured in the same direction, of the sealing means (29u) in the unloaded condition, whereas the radial extent of the groove (29) in the end face (30) of the flange (39, 40) is greater than overall thickness (2r), measured in the radial direction, of the sealing means (29u) in the unloaded condition.

12. Pipe fitting according to one of Claims 1 and 6 to 11, characterized in that the groove (29) accommodating the seal (29a) is an annular groove which is equal-side and trapezoidal in cross-section.

13. Pipe fitting according to one of Claims 1 and 6 to 11, characterized in that the groove (29') accommodating the seal (29a) is an annular groove which is curved in an arched shape in cross-section.

14. Pipe fitting according to one of Claims 1 and 6 to 11, characterized in that the groove (29') accommodating the seal (29a) is an annular groove with an outer wall (51) parallel to the pipe inside diameter (d), a radially running base wall and an inner wall (52) running inwards at a slope.

15. Pipe fitting according to one or more of Claims 1 to 14, characterized in that the end face of the flange has a phase (48) running back at a slope from the groove (29) accommodating a seal (29a) up to the flange outer edge.

16. Pipe fitting according to one or more of Claims 1 and 6 to 15, characterized in that at least one annular, encircling, raised pointed rib (55) is integrally formed in the base of the groove (29") accommodating the seal (29a).

**Revendications**

1. Raccord (A, B, C) avec un dispositif de raccordement à bride pour relier au moins deux extrémités de tuyau disposées de façon à faire un angle l'une avec l'autre, raccord (A, B, C) à au moins une extrémité duquel est formée une bride marginale annulaire (3, 4, 8, 9, 10, 14, 15, 16) dépassant de la surface du raccord et sur laquelle s'engage un collier de serrage (F) afin de l'assujettir à une autre bride marginale, caractérisé en ce que le raccord (A, B, C) présente au moins deux ouvertures de raccordement (1, 2, 5, 6, 7, 11, 12, 13) inclinées les unes par rapport aux autres d'au moins 45° et en ce que la face frontale (30) de la bride marginale (3, 4, 8, 9, 10, 14, 15, 16) présente une rainure (29) s'étendant sur tout le pourtour pour recevoir un organe d'étanchéité et, en outre, entre la rainure (29) et le diamètre intérieur (d), un évidement (41, 42) s'étendant sur tout le pourtour et qui dans la zone de transition entre la paroi de tuyau et la bride (39, 40) forme une zone de flexion de consigne à épaisseur de paroi réduite.

2. Raccord selon la revendication 1, caractérisé en ce que dans la courbure extérieure du raccord (C) présentant deux ouvertures de raccordement (11, 12) inclinées de 90° l'une par rapport à l'autre est prévue au moins une autre ouverture de raccordement (13) munie d'une bride marginale (16).

3. Raccord selon la revendication 1, caractérisé en ce que la deuxième ouverture de raccordement (4, 9, 10, 15) est réalisée sous la forme d'une extrémité pointue (21) ou à manchon (24).

4. Raccord selon la revendication 1 ou 2, caractérisé en ce que le bord (32) de la bride (3, 4, 8, 9, 10, 14, 15, 16, 19, 23, 39, 40) s'étend de manière biseautée en direction de la paroi du tuyau et en ce que les biseaux de deux brides (3, 4, 8, 9, 10, 14, 15, 16, 19, 23, 39, 40) placées l'une contre l'autre présentent en coupe une forme de toit sur laquelle le collier de serrage (F) s'engage avec sa section intérieure en forme de toit en exerçant une pression.

5. Raccord selon l'une quelconque des revendications précédentes, caractérisé en ce qu'à l'ouverture de raccordement (1, 2, 5, 6, 7, 11, 12, 13) est associé un couvercle de fermeture (E) qui, présentant un bord biseauté (28) et un diamètre extérieur correspondant à la bride (3, 4, 8, 9, 10, 14, 15, 16, 19, 23, 39, 40), peut être bloqué au moyen d'un collier de serrage sur chaque bride (3, 4, 8, 9, 10, 14, 15, 16, 19, 23, 39, 40) de façon à fermer l'ouverture.

6. Raccord selon l'une quelconque des revendications précédentes, caractérisé en ce que dans la rainure périphérique (29), prévue dans la face frontale (30) réalisée sans élévations, est prévue une bague d'étanchéité (29a) qui lors du montage sert de moyen auxiliaire de centrage et de rotation et n'est étanchéifiante qu'après la fermeture du collier de serrage (F).

7. Raccord selon la revendication 1, caractérisé en ce que l'évidement (41, 42) s'étendant sur tout le pourtour est une rainure annulaire présentant une section de préférence ronde ou en forme d'auge.

8. Raccord selon l'une quelconque des revendications précédentes, caractérisé en ce que la face frontale (47) limitée intérieurement par le diamètre intérieur (d) du tuyau et extérieurement par l'évidement (41, 42) est légèrement décalée en arrière par rapport à la face frontale restante (30) de la bride (39, 40).

9. Raccord selon la revendication 1, caractérisé en ce que l'évidement (41, 42) s'étend avec une profondeur approximativement constante ou croissante jusqu'au diamètre intérieur (d) du tuyau.

10. Raccord selon au moins l'une quelconque des revendications 1 et 6 à 9, caractérisé en ce que la distance radiale entre la rainure périphérique (29) pour la bague d'étanchéité (29a) et l'évidement (41, 42) est moins grande que l'étendue radiale de la rainure périphérique (29) dans le côté frontal (30) de la bride (39, 40).

11. Raccord selon l'une quelconque des revendications 1 et 6 à 10, caractérisé en ce que la profondeur (h), mesurée perpendiculairement au côté frontal (30) de la bride (39, 40), de la rainure (29) recevant l'organe d'étanchéité (29a) est inférieure à la moitié (r) de l'épaisseur totale, mesurée dans la même direction, de l'organe d'étanchéité (29u) à l'état non chargé, alors que l'étendue radiale de la rainure (29) dans le côté frontal (30) de la bride (39, 40) est plus grande que l'épaisseur totale (2r), mesurée dans la direction radiale, de l'organe d'étanchéité (29u) à l'état non chargé.

12. Raccord selon l'une quelconque des revendications 1 et 6 à 11, caractérisé en ce que la rainure (29) recevant l'organe d'étanchéité (29a) est une rainure annulaire à section trapézoïdale isocèle en coupe transversale.

13. Raccord selon l'une quelconque des revendications 1 et 6 à 11, caractérisé en ce que la rainure (29') recevant l'organe d'étanchéité (29a) est une rainure annulaire qui en coupe transversale est courbée en forme d'arc.

14. Raccord selon l'une quelconque des revendications 1 et 6 à 11, caractérisé en ce que la rainure (29') recevant l'organe d'étanchéité (29a) est une rainure annulaire présentant une paroi extérieure (51) parallèle au diamètre intérieur (d) du tuyau, une paroi formant fond s'étendant radialement et une paroi intérieure (52) s'étendant obliquement vers l'intérieur.

15. Raccord selon l'une quelconque des revendications précédentes, caractérisé en ce que la face frontale de la bride présente, à partir de la rainure (31) recevant un organe d'étanchéité (29a) jusqu'au bord extérieur de la bride, un chanfrein (48) s'étendant obliquement vers l'arrière.

16. Raccord selon au moins l'une quelconque des revendications 1 et 6 à 15, caractérisé en ce que sur le fond de la rainure (29") recevant l'organe d'étanchéité (29a) est formée en tant que partie intégrante de ce fond au moins une nervure pointue annulaire continue (55) faisant saillie.

Fig.1a

Fig.1b

Fig.1c

Fig.4

Fig.2

Fig.3

Fig.6

Fig.5

Fig.8

Fig.9

Fig.11

Fig.7

Fig.10

Fig.12

Fig.13

Fig.14

Fig.15

Fig.16